**Europäisches Patentamt**

**European Patent Office**

**Office européen des brevets**

(19)

(11) Veröffentlichungsnummer. **0 193 041**
**B1**

(12) **EUROPÄISCHE PATENTSCHRIFT**

(45) Veröffentlichungstag der Patentschrift:
31.05.89

(51) Int. Cl.⁴: **G 21 C 19/32,** G 21 C 5/00

(21) Anmeldenummer: **86101860.4**

(22) Anmeldetag: **13.02.86**

(54) Einrichtung zum Einsetzen von Kernbrennstoff oder Neutronenabsorberstoff enthaltenden Stäben in einer vorgegebenen dichten Packung in einen Behälter.

(30) Priorität: 25.02.85 DE 3506584

(43) Veröffentlichungstag der Anmeldung:
03.09.86 Patentblatt 86/36

(45) Bekanntmachung des Hinweises auf die Patenterteilung:
31.05.89 Patentblatt 89/22

(84) Benannte Vertragsstaaten:
BE CH DE FR LI SE

(56) Entgegenhaltungen:
EP-A-0 066 695
EP-A-0 128 236
WO-A-83/04454
US-A-3 807 018

(73) Patentinhaber: **Siemens Aktiengesellschaft Berlin und München, Wittelsbacherplatz 2, D-8000 München 2 (DE)**

(72) Erfinder: **Jung, Wilfried, Dipl.- Phys., Karl- May-strasse 16, D-8520 Erlangen (DE)**
Erfinder: **Knaab, Heinz, Dipl.- Ing., Lärchenweg 18, D-8520 Erlangen (DE)**

EP 0 193 041 B1

## Beschreibung

Die Erfindung betrifft eine Einrichtung nach dem Oberbegriff des Patentanspruchs 1.

Eine derartige Einrichtung ist in der Europäischen Patentanmeldung 0128236 beschrieben. Das Einsatzteil dieser Einrichtung weist als Führungskanäle für die Kernbrennstoff oder Neutronenabsorberstoff enthaltenden Stäbe Führungsrohre auf, während der bezüglich den Haltekorb der Dichtsetzvorrichtung ortsfest positionierbare Niederhaltekörper aus einer Vielzahl von Niederhaltefingern gebildet ist, von denen jeder beim Ziehen des Einsatzteiles aus dem Haltekorb der Dichtsetzvorrichtung in eine Eintrittsöffnung eines anderen Führungsrohres am Eintrittsquerschnitt des Einsatzteiles greift und so den im jeweiligen Führungsrohr befindlichen Stab aus seinem Führungsrohr herausdrückt und im Haltekorb zurückhält.

Der Erfindung liegt die Aufgabe zugrunde, die vorgeschlagene Einrichtung weiterzubilden, die Vielzahl von Niederhaltefingern zu vermeiden und das Dichtsetzen der Stäbe zu erleichtern.

Zur Lösung dieser Aufgabe hat die eingangs angegebene Einrichtung erfindungsgemäß die Merkmale des kennzeichnenden Teiles des Patentanspruchs 1.

Der als Abdeckscheibe ausgebildete Niederhaltekörper dieser erfindungsgemäß ausgebildeten Einrichtung bedarf im Gegensatz zu Niederhaltefingern praktisch keines Justieraufwandes. Auch erzeugt er beim Ziehen des Einsatzteiles aus dem Haltekorb der Dichtsetzvorrichtung keinen Reibungswiderstand in den Führungskanälen des Einsatzteiles, wie dies bei Niederhaltefingern der Fall ist. Der als Abdeckscheibe ausgebildete Niederhaltekörper schiebt ferner beim Ziehen des Einsatzteiles aus dem Haltekorb der Dichtsetzvorrichtung die Platte, die den Eintrittsquerschnitt des Einsatzteiles mit den Eintrittsöffnungen für die Stäbe bildet, unter Beanspruchung der Rückstellfedern in Richtung auf den Austrittsquerschnitt des Einsatzteiles hin und deckt zugleich die Eintrittsöffnungen in dieser Platte ab, so daß die im Einsatzteil befindlichen Stäbe nicht aus diesen Eintrittsöffnungen heraustreten können. Deshalb treten diese Stäbe mit einem Ende am Austrittsquerschnitt des Einsatzteiles in einer nahezu dichten Anordnung (z. B. einem Dreieckgitter) aus und können dort im Haltekorb der Dichtsetzvorrichtung in die vorgegebene dichte (z. B. hexagonal dichte) Packung zusammengepreßt und in dieser vorgegebenen dichten Packung zusammengehalten werden.

Ist die den Eintrittsquerschnitt bildende Platte des Einsatzteiles schließlich bis zu ihrem Anschlag geschoben worden, sind die im Einsatzteil befindlichen Stäbe an ihren am Austrittsquerschnitt des Einsatzteiles ausgetretenen Enden bereits soweit verdichtet und im Haltekorb festgehalten, daß sie mit dem Einsatzteil nicht mehr mitwandern, wenn dieses vollständig aus dem Haltekorb der Dichtsetzvorrichtung unter Mitnahme des durch die Abdeckscheibe gebildeten Niederhaltekörpers herausgezogen wird. Ist das Einsatzteil schließlich vollständig aus dem Haltekorb der Dichtsetzvorrichtung herausgezogen, befinden sich die vom Einsatzteil im Haltekorb der Dichtsetzvorrichtung zurückgelassenen Stäbe auch an ihrem anderen Ende in der vorgegebenen dichten Packung.

Vorteilhafte Weiterbildungen der erfindungsgemäß ausgebildeten Einrichtung, mit denen insbesondere ein geringer Reibungswiderstand zwischen den Kernbrennstoff oder Neutronenabsorberstoff enthaltenden Stäben und den Führungskanälen im Einsatzteil erzielt wird, sind Gegenstand der Patentansprüche 2 bis 5.

Die Erfindung und ihre Vorteile seien arhand der Zeichnung an einem Ausführungsbeispiel näher erläutert:

Fig. 1    zeigt stark schematisiert und im Längsschnitt die Dichtsetzvorrichtung einer erfindungsgemäßen Einrichtung mit einem eingesetzten Einsatzteil, das mit Stäben gefüllt ist.

Fig. 2    zeigt eine Draufsicht auf die Dichtsetzvorrichtung nach Fig. 1.

Fig. 3    zeigt ebenfalls stark schematisiert und im Längsschnitt einen Behälter zur Aufnahme von in der Dichtsetzvorrichtung nach den Fig. 1 und 2 dichtgesetzten Stäben.

Fig. 4    zeigt stark schematisiert und im Längsschnitt die Dichtsetzvorrichtung nach den Fig. 1 und 2 einschließlich Ziehwerkzeug für das Einsatzteil.

Fig. 5    zeigt ein Schema zum Verdeutlichen des Dichtsetzens von Stäben mit Hilfe der Dichtsetzvorrichtung nach den Fig. 1, 2 und 4.

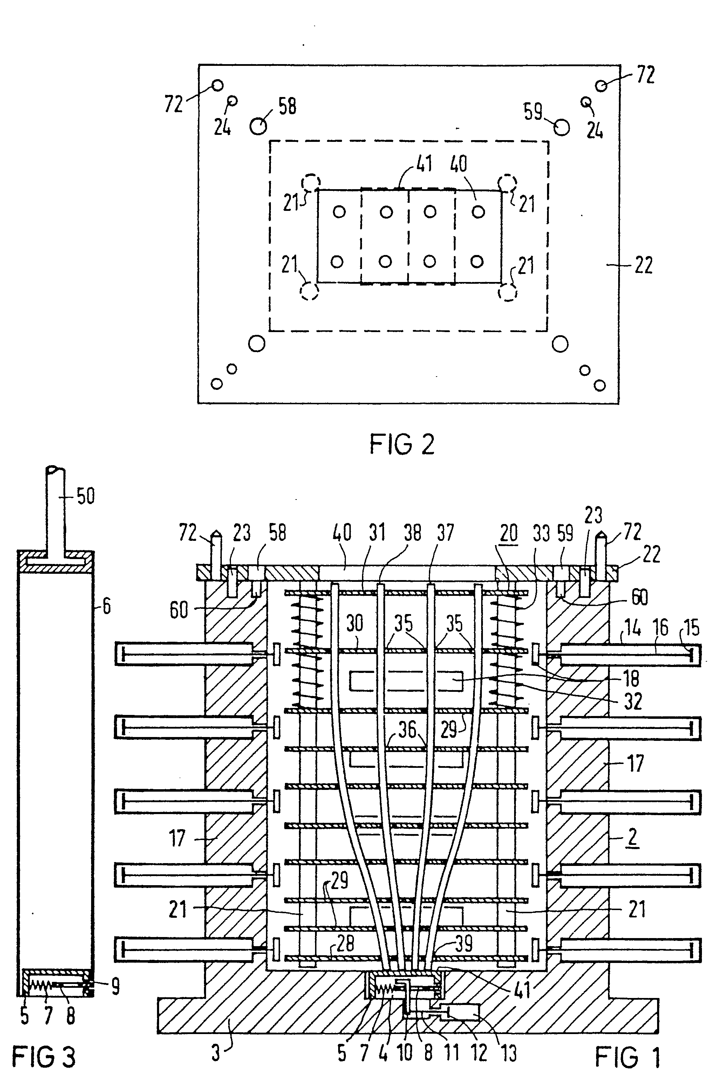

Die Dichtsetzvorrichtung nach den Fig. 1, 2 und 4 ist in einem nicht näher dargestellten, mit Wasser gefüllten Becken angeordnet. Sie weist einen Haltekorb 2 auf, der im wesentlichen die Form eines hohlen, unten mit einem Boden 3 verschlossenen Quaders hat und der mit vertikaler Längsachse auf dem Beckenboden befestigt ist. Der Haltekorb 2 ist oben offen.

Auf der Innenseite des Bodens 3 des Hältekorbes 2 der Dichtsetzvorrichtung befindet sich in der Mitte eine Ausnehmung 4 zur Aufnahme eines Bodenteiles 5 eines Behälters 6 mit quadratischem Guerschnitt, wie er in Fig. 3 dargestellt ist. Dieses Bodenteil 5 ist in der Ausnehmung 4 mit seiner Innenseite nach außen angeordnet und weist auf seiner Außenseite ein mit einer Rücksteilfeder 7 versehenes Verrastorgan 8 auf, das unter Einwirkung der Rückstellfeder 7 in eine Verrastöffnung 9 im Mantel des Behälters 6 einrasten kann.

In die Ausnehmung 4 am Boden 3 des Haltekorbes 2 greift eine vertikale Betätigungsstange 10 für das Verrastorgan 8 des Bodenteiles 5. Diese Betätigungsstange 10 sitzt an einer horizontalen Kolbenstange 11 eines Kolbens 12, der sich in einem Zylinder 13 mit horizontaler Längsachse im Boden 3 des Haltekorbes 2 befindet und der beiderseits des Kolbens 12 mit einem Hydraulikmedium, z. B. Preßluft, beaufschlagbar ist.

An den vertikalen Seitenwänden 17 des Haltekorbes 2 befinden sich ebenfalls Zylinder 14 mit horizontaler Längsachse, mit Kolben 15 und mit horizontaler Kolbenstange 16. Auch diese Zylinder 14 sind beiderseits der Kolben 15 mit einem Hydraulikmedium beaufschlagbar. Auf dem Außenende jeder Kolbenstange 16 befindet sich quer zur Längsrichtung der Kolbenstange 16 an der Innenseite der betreffenden Seitenwand 17 des Haltekorbes 2 eine horizontale Druckleiste 18, die mit dem Kolben 15 in Längsrichtung der Kolbenstange 16 hin und her verschiebbar ist. Günstigerweise befinden sich die Druckleisten 18 an zwei zueinander parallelen Seitenwänden 17 jeweils paarweise und abwechselnd in verschiedenen Querschnittsebenen des Haltekorbes 2, die voneinander Abstand haben.

Im Haltekorb 2 der Dichtsetzvorrichtung befindet sich ferner ein Einsatzteil 20, welches ein Grundgerüst aufweist, das aus vier zueinander parallelen Eckstangen 21 gebildet ist, die mit ihren Oberenden an der Unterseite einer rechteckigen Auflageplatte 22 befestigt sind. Die Eckstangen 21 sind vertikal im Haltekorb 2 angeordnet, während die Auflageplatte 22 mit ihrer Unterseite auf Stirnflächen der Seitenwände 17 oben am Haltekorb 2 satt aufliegt und dort durch vertikale Zentrierstifte 23 zentriert ist, die in die Stirnflächen der Seitenwände 17 eingelassen sind und die durch Zentrierdurchführungen 24 in der Auflageplatte 22 greifen.

An den Unterenden der Eckstangen 21 sind in Längsrichtung dieser Eckstangen 21 gesehen hintereinander zueinander und zur Auflageplatte 22 parallele Platten 28 und 29 mit Abstand voneinander angeordnet, durch die die Eckstangen 21 rechtwinklig greifen und die mit diesen Eckstangen 21 verschweißt sind, so daß sie am Einsatzteil 20 starr befestigt sind. An den Oberenden der Eckstangen 21 befinden sich in Längsrichtung der Eckstangen 21 gesehen hintereinander zwischen einer an den Eckstangen 21 festgeschweißten Platte 29 und der Auflageplatte 22 zwei Platten 30 und 31, durch die ebenfalls die Eckstangen 21 rechtwinklig greifen, die aber auf diesen Eckstangen 21 in deren Längsrichtung verschiebbar sind. Zwischen der starr mit den Eckstangen 21 verschweißten Platte 29 und der ihr unmittelbar benachbarten verschiebbaren Platte 30 befinden sich Rückstellfedern, die aus Schraubenfedern 32 bestehen, von denen jeweils eine auf jeder der Eckstangen 21 aufsitzt. Zwischen der verschiebbaren Platte 30 und der der Auflageplatte 22 unmittelbar benachbarten verschiebbaren Platte 31 befinden sich ebenfalls Rückstellfedern, die durch Schraubenfedern 33 gebildet sind, von denen ebenfalls jeweils eine auf jeder der Eckstangen 21 aufsitzt.

Die verschiebbare Platte 30 und die starr an den Eckstangen 21 festgeschweißte Platte 29, die jeweils einen Querschnitt des Einsatzteiles 20 bilden, weisen Durchtrittsöffnungen 35 und 36 auf. Jeweils eine der Durchtrittsöffnungen 35 und 36 von jeder der Platten 30 und 29 bilden zusammen einen Führungskanal für einen z. B. abgebrannten Kernbrennstoff enthaltenden Stab 37. Die Eintrittsöffnung 38 für einen solchen Führungskanal befindet sich jeweils in der Platte 31, die den Eintrittsquerschnitt des Einsatzteiles 20 bildet, während die Austrittsöffnung 39 in der Platte 28 ganz am Unterende der Eckstangen 21 angebracht ist, die den Austrittsquerschnitt des Einsatzteiles 20 bildet.

Ausgehend von der den Eintrittsquerschnitt des Einsatzteiles 20 bildenden verschiebbaren Platte 31 fluchten die Eintrittsöffnung 38 und die Durchtrittsöffnungen 35 und 38 eines jeden Führungskanals über eine Höhe gleich etwa ein Drittel der von der Länge der Eckstangen 21 bestimmten Gesamthöhe des Einsatzteiles 20. Daran anschließend bestimmen die Durchtrittsöffnungen 36 in den starr mit den Eckstangen 21 verschweißten Platten 29 über eine Höhe etwa gleich der Hälfte der Gesamthöhe des Einsatzteiles 20 jeweils einen definiert gebogenen Führungskanal für den betreffenden Stab 37. Schließlich bestimmen die Durchtrittsöffnungen 36 der starr mit den Eckstangen 21 verschweißten Platten 29 und die Austrittsöffnung 39 der den Austrittsquerschnitt des Einsatzteiles 20 bildenden, ebenfalls starr mit den Eckstangen 21 verschweißten Platte 28 über eine Höhe gleich etwa ein Sechstel der Gesamthöhe des Einsatzteiles 20 geradlinige Führungskanäle für die Stäbe 37.

Diese geradlinigen Führungskanäle sind auf einen gemeinsamen Zielpunkt gerichtet, der sich mit Abstand von der dem Austrittsquerschnitt bildenden Platte 28 auf deren Außenseite gegenüber deren Zentrum befindet. Alle Austrittsöffnungen 39 in der den Austrittsquerschnitt des Einsatzteiles 20 bildenden Platte 28 befinden sich gegenüber dem Bodenteil 5 in der Ausnehmung 4 im Boden 3 des Haltekorbes 2.

In der Auflageplatte 22 des Einsatzteiles 20 befindet sich zwischen den vier Eckstangen 21 ein rechteckiges Fenster 40, das eine Umrandung für den Eintrittsquerschnitt A des Einsatzteiles 20 bildet. Die Umrandung des Austrittsquerschnittes B des Einsatzteiles 20 ist durch die Umrandung 41 des Bodenteils 5 des Behälters 6 bestimmt.

In den leeren Haltekorb 2 der Dichtsetzvorrichtung, dessen Druckleisten 18 eingefahren sind, so daß sie sich unmittelbar an der Innenseite der Seitenwände 17 befinden, wird zunächst ein leerer Behälter 6, der an einem Hebe- und Transportgerät 50 hängt, mit seinem Bodenteil 5 in die Ausnehmung 4 am Boden 3 des Haltekorbes 2 eingesetzt. Dort durchgreift die Betätigungsstange 10 das Verrastorgan 8 an der Außenseite des Bodenteiles 5 und löst durch entsprechendes Betätigen des Kolbens 12 die Verrastung des Bodenteiles 5 mit dem Behälter 6. Hierauf wird der Behälter 6 wieder aus dem Haltekorb 2 herausgezogen und zur Seite transportiert, während sein Bodenteil 5 in der Ausnehmung 4 verbleibt und von der das Verrastorgan 8 hintergreifenden Betätigungsstange 10 dort festgehalten wird.

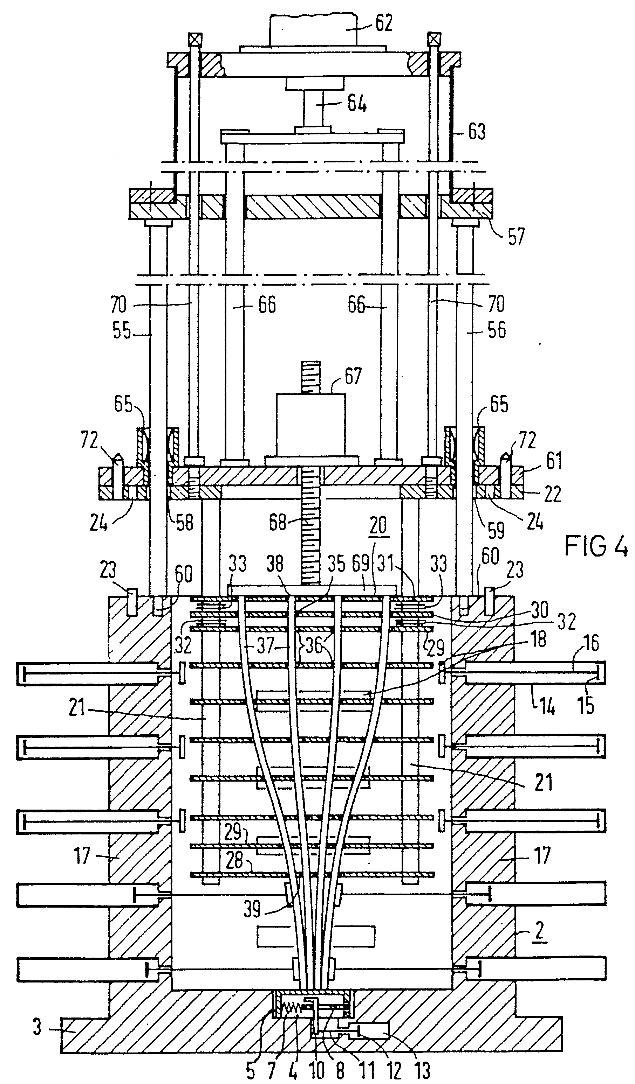

Hierauf wird mit Hilfe eines in Fig. 4 näher dargestellten Ziehwerkzeuges das Einsatzteil 20 in den Haltekorb 2 der Dichtsetzvorrichtung so eingesetzt, daß die Auflageplatte 22 an den Stirnflächen der Seitenwände 17 oben am Haltekorb 2 satt aufliegt und durch die Zentrierstifte 23 zentriert ist. Das Ziehwerkzeug wird sodann vom Einsatzteil 20 gelöst, abgehoben und zur Seite gefahren.

Anschließend kann die den Eintrittsquerschnitt des Einsatzteiles 20 darstellende Platte 31 des Einsatzteiles 20 mit einer nicht dargestellten Arretiervorrichtung bei entspannten Rückstellfedern 32 und 33 an den Eckstangen 21 des Einsatzteiles 20 arretiert werden.

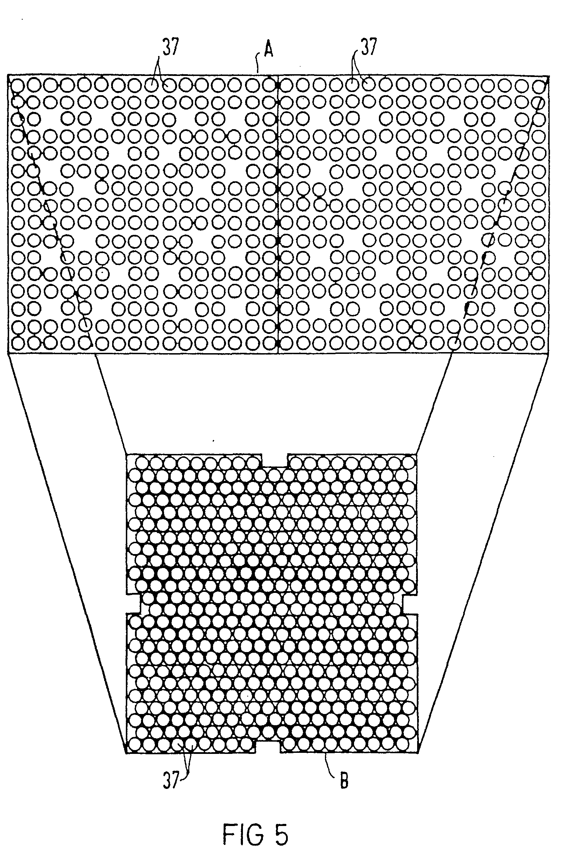

Sodann werden zwei Bündel z. B. abgebrannten Kernbrennstoff enthaltender Stäbe mit vertikaler d.h. zur Platte 31 rechtwinkliger Längsachse der Stäbe im Fenster 40 der Auflageplatte 22 auf die Platte 31 aufgesetzt. Diese beiden Bündel stammen aus zwei abgebrannten Kernreaktorbrennelementen, deren Kopf- und Fußteile entfernt worden sind. Die Stäbe der beiden Stabbündel werden durch gitterformige Abstandhalter in ihrer Position zueinander gehalten. In Fig. 5 ist der Querschnitt A der beiden Stabbündel mit den einzelnen Stäben 37 im Fenster 40 angedeutet. Die zu den Führungskanälen im Einsatzteil 20 für die Stäbe 37 gehörenden Eintrittsöffnungen 38 in der Platte 31 haben eine der Position der Stäbe 37 im Querschnitt A in Fig. 5 entsprechende Position.

Die Stäbe 37 werden anschließend alle zugleich mit einem nicht dargestellten Ausdrückwerkzeug aus den gitterförmigen Abstandhaltern heraus und in die Führungskanäle des Einsatzteiles 20 hineingedrückt, die durch die Eintrittsöffnungen 38 in der Platte 31, die Durchtrittsöffnungen 36 in den Platten 29 und die Austrittsöffnungen 39 in der Platte 28 gebildet sind. Da die Länge der durch Hüllrohre aus einer Zirkoniumlegierung gebildeten Stäbe 37 und damit auch die Gesamthöhe des Einsatzteiles 20 etwa 4 Meter, ihr Durchmesser aber nur etwa 10 mm und die Wandstärke der Hüllrohre weniger als 1 mm betragen, können die Stäbe hierbei auch den durch die Durchtrittsöffnungen 36 in den Platten 29 gebildeten krummen Führungskanälen folgen, wenn die Anzahl der Platten 29 des Einsatzteiles 20 nur genügend groß und ihr Abstand voneinander nur genügend klein ist.

Nachdem die Stäbe 37 vollständig in die Führungskanäle des Einsatzteiles 20 hineingeschoben worden sind, wird das nicht dargestellte Ausdrückwerkzeug zur Seite gefahren und das Ziehwerkzeug entsprechend Fig. 4 wieder am Einsatzteil 20 im Haltekorb 2 befestigt. Dieses Ziehwerkzeug weist zwei vertikale Führungsstangen 55 und 56 auf, die mit ihren Oberenden an der Unterseite eines gemeinsamen Tragkörpers 57 befestigt sind. Diese Führungsstangen 55 und 56 sind durch Durchführungen 58 und 59 in der Auflageplatte 22 des Einsatzteiles 20 geführt und greifen mit ihren Unterenden in Justierausnehmungen 60 in den Stirnflächen der Seitenwände 17 oben am Haltekorb 2.

Durch den Tragkörper 57 sind zwei zu den Führungsstangen 55 und 56 parallele Zugstangen 66 geführt, die mit ihren Unterenden auf der, Oberseite einer Halteplatte 61 festgeschraubt sind. Die durch den Tragkörper 57 geführten Oberenden der Zugstangen 66 sind am Hubkolben eines Hubzylinders 62 befestigt, der seiner seits am oberen Ende eines hohlzylinderförmigen Körpers 63 angebracht ist, an dessen unterem Ende der Tragkörper 57 befestigt ist und in dem die an den Oberenden der Zugstangen 66 befestigte Kolbenstange 64 des Hubzylinders 62 geführt ist.

Die Führungsstangen 55 und 56 greifen durch die Tragplatte 61. Diese Tragplatte 61 ist über Kugelbüchsen 65 in Längsrichtung dieser Führungsstangen 55 und 56 bewegbar. Auf der Oberseite der Tragplatte 61 sitzt in der Mitte ein elektrischer Stellmotor 67, der eine Spindel 68 antreibt, die durch die Tragplatte 61 auf deren Unterseite greift. Auf der Unterseite der Tragplatte 61 ist am Unterende der Spindel 68 eine horizontale Abdeckscheibe 69 so gehaltert, daß sie sich nicht mit der zu den Führungsstangen 55 und 56 und den Zugstangen 66 parallelen Spindel 68 mitdreht. Diese Abdeckscheibe 69 deckt alle Eintrittsöffnungen 38 der Platte 31 des Einsatzteiles 20 ab.

Nach dem Aufsetzen des Ziehwerkzeuges mit den Führungsstangen 55 und 56 durch die Durchführungen 58 und 59 in der Auflageplatte 22 hindurch auf den Stirnflächen der Seitenwände 17 des Haltekorbes 2 wird die Unterseite der Halteplatte 61 mit Zentrierbolzen 72 an der Oberseite der Auflageplatte 22 des Einsatzteiles 20 zentriert und mit Hilfe von Schrauben 70 an der Auflageplatte 22 festgeschraubt. Sodann wird die Arretiervorrichtung gelöst, mit der die Platte 31 des Einsatzteiles 20 an dessen Eckstangen 21 arretiert wurde.

Anschließend wird der Hubkolben im Hubzylinder 62 betätigt und das an der Halteplatte 61 festgeschraubte Einsatzteil 20 aus dem Haltekorb 2 herausgezogen. Zu gleicher Zeit wird der elektrische Stellmotor 67 in Betrieb gesetzt, welcher die Abdeckscheibe 69 an der Spindel 68 mit der gleichen Vorschubgeschwindigkeit auf die Platte 31 des Einsatzteiles 20 zubewegt, mit der das Einsatzteil 20 aus dem Haltekorb 2 herausgezogen wird, so daß die Abdeckscheibe 69 zunächst ortsfest bezüglich des Haltekorbes 2 der Dichtsetzvorrichtung positioniert bleibt. Durch die Abdeckscheibe 69 werden nicht nur die Stäbe 37 in den Führungskanälen des Einsatzteiles 20 zurückgehalten, sondern es werden auch die Platten 31 und 30 gegen die Rückstellfedern 32 und 33 auf die fest mit den Eckstangen 21 verschweißten Platten 29 des Einsatzteiles 20 bewegt, bis die Rückstellfedern 32 und 33 auf Anschlag zusammengepreßt sind und ein nicht dargestellter elektrischer Endschalter den elektrischen Stellmotor 67 abschaltet. Bis dahin sind die Stäbe 37 bereits zu etwa einem Drittel ihrer Länge aus der den Austrittsquerschnitt bildenden Platte 28 ausgetreten und durch sukzessives Ausfahren der Druckleisten 18 zusammengepreßt, so daß diese Stäbe an ihren Unterenden in der vorgegebenen dichten Packung rechtwinklig auf der Innenseite des Bodenteiles 5 in der Ausnehmung 4 am Boden 3 des Haltekorbes 2 aufstehen und ein Mitwandern von Stäben 37 beim weiteren Herausziehen des Einsatzteiles 20 aus dem Haltekorb 2 ausgeschlossen ist. Das Zusammenpressen der Stäbe 37 mit Hilfe der Druckleisten 18 wird dadurch erleichtert, daß die aus den Austrittsöffnungen 39 der Platte 28 austretenden Stäbe 37 die Tendenz haben, von selbst in die vorgegebene dichte Packung zusammenzulaufen.

Durch sukzessives weiteres Ausfahren der Druckleisten 18 von unten nach oben in den Haltekorb 2 hinein während des Herausziehens des Einsatzteiles 20 aus dem Haltekorb 2 werden die Stäbe 37 nach dem vollständigen Herausziehen des Einsatzteiles 20 aus dem Haltekorb 2 nur noch durch diese Druckleisten 18 in der vorgegebenen dichten Packung auf dem Bodenteil 5 gehalten. Der Querschnitt der auf diesem Bodenteil 5 aufstehenden Stäbe 37 kann beispielsweise der hexagonal dichtesten Packung nach Querschnitt B in Fig. 5 entsprechen.

Das Ziehwerkzeug mit dem Halteteil 20 wird anschließend vom Haltekorb 2 abgehoben und zur Seite bewegt. Anschließend wird der am Hebe- und Transportgerät 50 hängende, unten offene Behälter 6 über die in der vorgegebenen dichten Packung im Haltekorb 2 gehaltenen Stäbe 37 von oben nach unten geschoben, wobei die Druckleisten 18 entsprechend sukzessive von oben nach unten wieder eingefahren werden. Schließlich wird der Behälter 6 noch über das Bodenteil in der Aussparung 4 geschoben und das Verrastorgan 8 von der Betätigungsstange 10 freigegeben, so daß das Bodenteil 5 wieder mit dem Behälter 6 verrastet ist. Der mit den Stäben 37 in vorgegebener dichter Packung gefüllte Behälter 6 kann abschließend mit der Hebevorrichtung 50 aus dem Haltekorb 2 herausgehoben und im Becken zur weiteren Disposition bereitgehalten werden.

## Patentansprüche

1. Einrichtung zum Einsetzen von Kernbrennstoff oder Neutronenabsorberstoff enthaltenden Stäben (37) eines Stabbündels aus einem Kernreaktorbrennelement mit zueinander parallelen Längsachsen in einer vorgegebenen dichten Packung in einen Behälter (6) durch Aufsetzen des Behälters auf ein ihm zugeordnetes Bodenteil (5) mit einer Dichtsetzvorrichtung mit Haltekorb (2) zum Aufnehmen des Bodenteiles und zum seitlichen Zusammenhalten der dichten Packung der mit einem Ende auf diesem Bodenteil aufstehenden Stäbe, mit einem dem Haltekorb zugeordneten Einsatzteil (20), das für jeden Stab des Stabbündels einen Führungskanal aufweist, das an einem Ende einen Austrittsquerschnitt zur Aufnahmestelle für das Bodenteil hin bildet mit der vorgegebenen dichten Packung des Stäbe entsprechend angeordneten Austrittsöffnungen (39) der Führungskanäle und das am anderen Ende einen Eintrittsquerschnitt zum Einschieben der Stäbe des Stabbündels bildet mit entsprechend der Position der Stäbe im Stabbündel angeordneten Eintrittsöffnungen (38) der Führungskanäle, sowie mit einem Ziehwerkzeug zum Ziehen des Einsatzteiles (20) aus dem Haltekorb (2) und von den Stäben in den Führungskanälen, das einen am Eintrittsquerschnitt des Einsatzteiles bezüglich dem Haltekorb ortsfest positionierbaren Niederhaltekörper zum Halten der in den Führungskanälen befindlichen Stäbe aufweist, dadurch gekennzeichnet, daß das Einsatzteil (20) mit einer Platte (31) versehen ist, die den Eintrittsquerschnitt mit den Eintrittsöffnungen (38) der Führungskanäle bildet und die am Einsatzteil (20) in Richtung zu dessen Austrittsquerschnitt hin gegen eine Rückstellfeder (33) bis zu einem Anschlag verschiebbar angebracht ist, und daß der Niederhaltekörper eine Abdeckscheibe (69) für die Austrittsöffnungen (38) der Führungskanäle in der den Eintrittsquerschnitt bildenden Platte (31) ist.

2. Einrichtung nach Anspruch 1, dadurch gekennzeichnet, daß das Einsatzteil (20) eine Platte (28) aufweist, die den Austrittsquerschnitt mit den Austrittsöffnungen (39) der Führungskanäle bildet und die starr am Einsatzteil (20) befestigt ist.

3. Einrichtung nach Anspruch 2, dadurch gekennzeichnet, daß das Einsatzteil (20) zwischen den beiden den Eintritts- und den Austrittsquerschnitt bildenden Platten (31) und (28) eine Zusatzplatte (30, 29) aufweist, die einen Querschnitt bildet, und die zu den Führungskanälen gehörende Durchtrittsöffnungen (35, 36) für die Stäbe (37) aufweist.

4. Einrichtung nach Anspruch 3, dadurch gekennzeichnet, daß sich die Zusatzplatte (30) auf der Seite des Einsatzteiles (20) mit der den Eintrittsquerschnitt bildenden Platte (31) befindet und in Richtung des Austrittsquerschnittes gegen eine Rückstellfeder (32) zusammen mit der den Eintrittsquerschnitt bildenden Platte (31) verschiebbar ist.

5. Einrichtung nach Anspruch 3, <u>dadurch gekennzeichnet,</u> daß sich die Zusatzplatte (29) auf der Seite des Einsatzteiles (20) mit der dem Austrittsquerschnitt bildenden Platte (28) befindet und starr am Einsatzteil (20) befestigt ist.

6. Einrichtung nach Anspruch 1, <u>dadurch gekennzeichnet,</u> daß die Führungskanäle an den Austrittsöffnungen (39) des Austrittsquerschnittes des Einsatzteiles (20) geradlinig und auf einen gemeinsamen Zielpunkt gerichtet sind, der sich mit Abstand vom Austrittsquerschnitt auf dessen Außenseite gegenüber dessen Zentrum befindet.

## Claims

1. Device for the insertion of rods (37), containing nuclear fuel or neutron absorber material, of a rod bundle out of a nuclear reactor fuel element, with longitudinal axes parallel to one another in a pregiven close packing, into a container (6), through the setting of the container on a floor part (5), which is allocated to it, with a close setting arrangement with holding basket (2) for receiving the floor part and for holding together sideways the close packing of the rods standing up with one end on this floor part; with an insert (20) allocated to the holding basket, which has for every rod of the rod bundle a guide canal, which forms at one end an exit cross section for the receiving place for the floor part, with exit openings (39) of the guide canals arranged corresponding to the pre-given close packing of the rods and, which forms at the other end an entry cross section for the rods of the rod bundle to be pushed in, with entry openings (38) of the guide canals arranged corresponding to the position of the rods in the rod bundle; as well as with a drawing tool to pull the insert (20) out of the holding basket (2) and the rods in the guide canals, said drawing tool having a holding down body at the entry cross section of the insert, which (body) can be positioned fixed with reference to the holding basket, for holding the rods located in the guide canals; characterised in that, the insert (20) is provided with a plate (31), which forms the entry cross section with the entry openings (38) of the guide canals and which is attached in a displaceable manner at the insert (20) in the direction towards its exit cross section against a readjusting spring (33) up to a stop; and in that, the holding down body is a cover disc (69) for the exit openings (38) of the guide canals in the plate (31) forming the entry cross section.

2. Device according to claim 1, characterised in that, the insert (20) has a plate (28), which forms the exit cross section with the exit openings (39) of the guide canals and which is rigidly fastened to the insert (20).

3. Device according to claim 2, characterised in that, the insert (20) has between the two plates (31) and (28) forming the entry and the exit cross section, an additional plate (30, 29), which forms a cross section and which has penetration openings (35, 36), belonging to the guide canals, for the rods (37).

4. Device according to claim 3, characterised in that, the additional plate (30) is located on the side of the insert (20) with the plate (31) forming the entry cross section and is displaceable in the direction of the exit cross section against a readjusting spring (32) together with the plate (31) forming the entry cross section.

5. Device according to claim 3, characterised in that, the additional plate (29) is located on the side of the insert (20) with the plate (28) forming the exit cross section and is rigidly fastened to the insert (20).

6. Device according to claim 1, characterised in that, the guide canals at the exit openings (39) of the exit cross section of the insert (20) are in a straight line and directed towards a common goal, which is located at a distance from the exit cross section on its outer side opposite its centre.

## Revendications

1. Dispositif d'introduction, suivant un fagotage tassé prescrit, de crayons (37), contenant du combustible nucléaire ou une substance absorbant les neutrons, d'un fagot de crayons d'un assemblage combustible de réacteur nucléaire à axes longitudinaux parallèles dans un récipient (6), par application du récipient, sur un fond (5) qui lui est associé, avec un dispositif de tassement comprenant un panier de maintien (2) destiné à recevoir le fond et à maintenir latéralement le fagotage tassé des crayons posé par une extrémité sur ce fond, avec une pièce d'insertion (20) associée au panier de maintien et comportant, pour chaque crayon du fagotage de crayons, un canal de guidage qui forme à l'une des extrémités une section transversale de sortie en direction de l'emplacement de réception du fond en présentant des ouvertures de sortie (39) des canaux de guidages disposées conformément au fagotage tassé des crayons prescrit, et qui forme, à l'autre extrémité, une section transversale d'entrée pour enfiler les crayons du fagot de crayons en présentant des ouvertures d'entrée (38) des canaux de guidage disposées conformément à la disposition des crayons dans le fagot de crayons, ainsi qu'avec un outil de traction, qui est destiné à retirer la pièce d'insertion (20) hors du panier de maintien (2) et des crayons dans les canaux de guidage et qui comporte un corps de retenue pouvant être mis en position fixe par rapport au panier de maintien et destiné à retenir les crayons se trouvant dans les canaux de guidage, caractérisé en ce que la pièce d'insertion (20) est munie d'une plaque (31) qui forme la section transversale d'entrée possédant les ouvertures d'entrée (38) des canaux de guidage et qui est montée sur la pièce d'insertion de manière à pouvoir être déplacée, à l'encontre d'un ressort de rappel (33), en direction de la section de sortie de la pièce d'insertion (20), jusqu'à une butée, et en ce que ledit corps de retenue est un disque de recouvrement (69) des ouvertures (38) des canaux de guidage ménagées dans la plaque (31) formant la section transversale d'entrée.

2. Dispositif suivant la revendication 1, caractérisé en ce que la pièce d'insertion (20) comporte une plaque (28) qui forme la section transversale de sortie ayant les ouvertures de sortie (39) des canaux de guidage, et qui est fixée rigidement à la pièce d'insertion (20).

3. Dispositif suivant la revendication 2, caractérisé en ce que la pièce d'insertion (20) comporte, entre les deux plaques (31) et (28) formant la section transversale d'entrée et la section transversale de sortie, une plaque supplémentaire (30, 29) qui forme une section transversale et qui comporte des ouvertures de passage (35, 36) qui appartiennent aux canaux de guidage et qui sont destinées aux crayons (37).

4. Dispositif suivant la revendication 3, caractérisé en ce que la plaque supplémentaire (30) se trouve du côté de la pièce d'insertion (20) possédant la plaque (31) formant la section transversale d'entrée, et peut coulisser dans la direction de la section transversale de sortie, à l'encontre d'un ressort de rappel (32), en même temps que la plaque (31) formant la section transversale d'entrée.

5. Dispositif suivant la revendication 3, caractérisé en ce que la plaque supplémentaire (29) se trouve du côté de la pièce d'insertion (20) présentant la plaque (28) formant la section transversale de sortie et fixée rigidement à la pièce d'insertion (20).

6. Dispositif suivant la revendication 1, caractérisé en ce qu'au niveau des orifices de sortie (39) de la section transversale de sortie de la pièce d'insertion (20), les canaux de guidage s'étendent de façon rectiligne et sont dirigés sur un point commun qui se trouve à distance de la section transversale de sortie du côté extérieur de celle-ci, par rapport à son centre.

FIG 2

FIG 3

FIG 1

FIG 4

FIG 5